Europäisches Patentamt

(19) European Patent Office

Office européen des brevets

(11) Veröffentlichungsnummer: **0 141 971**
**B1**

(12) **EUROPÄISCHE PATENTSCHRIFT**

(45) Veröffentlichungstag der Patentschrift: **28.11.90**

(51) Int. Cl.⁵: **H 04 M 19/08**

(21) Anmeldenummer: **84111070.3**

(22) Anmeldetag: **17.09.84**

(54) Schaltungsanordnung für eine bedarfsweise netz- oder ferngespeiste Fernsprechstation.

(30) Priorität: **19.09.83 DE 3333791**

(43) Veröffentlichungstag der Anmeldung:
**22.05.85 Patentblatt 85/21**

(45) Bekanntmachung des Hinweises auf die Patenterteilung:
**28.11.90 Patentblatt 90/48**

(84) Benannte Vertragsstaaten:
**AT BE CH DE GB IT LI NL**

(56) Entgegenhaltungen:
**CH-A- 596 723**
**DE-A- 3 201 625**

(73) Patentinhaber: **Siemens Aktiengesellschaft**
**Wittelsbacherplatz 2**
**D-8000 München 2 (DE)**

(72) Erfinder: **Pierrel, Hans-Joachim, Dipl.-Ing. (FH)**
**Theodor-Heuss-Strasse 38**
**D-8905 Mering (DE)**

Courier Press, Leamington Spa, England.

# Beschreibung

Die Erfindung betrifft eine Schaltungsanordnung für eine bedarfsweise netz- oder ferngespeiste Fernsprechstation, wobei ein ausgangsseitig eine konstante Versorgungsspannung liefernder und eingangsseitig mit einem Pufferkondensator überbrückter Schaltregler vorgesehen ist.

Fernsprechstationen werden im allgemeinen über die Teilnehmerleitung vom Fernsprechamt aus ferngespeist (a/b-Ader). Besonders bei Komfortausführungen von Fernsprechstationen (allgemein Fernmeldeendgeräten) wird durch die zahlreichen Teilnehmerdienste und deren Anzeige der Leistungsverbrauch immer größer, so daß eine grundsätzliche Leistungsversorgung über die Teilnehmerleitung unwirtschaftlich ist. Dies trifft insbesondere bei großen Anschlußreichweiten zu. Daher werden für solche Fernsprechstationen stationäre Netzgeräte vorgesehen, die für einen größeren Leistungsbedarf ausgelegt sind.

Solche Netzgeräte haben jedoch den Nachteil, daß sie netzabhängig sind und daß bei Stromausfall kein Fernsprechbetrieb mehr möglich wäre. Daher ist es notwendig z.B. bei Netzausfall auf die Fernspeisung umzuschalten wie für Datenspeicher im Fernmeldeanlagen aus CH-A-596 723 (SIEMENS-ALBI) bekannt, wobei größere Leistungsverbraucher im Endgerät abgeschaltet werden. Eine manuelle Umschaltung als Lösungsweg ist dem Fernsprechteilnehmer kaum zumutbar. Eine einfache Umschaltfunktion durch Zusammenschalten der beiden Spannungsquellen über Dioden ist ebenfalls nicht zweckmäßig, da die Speisung über das Netzgerät vorrangig sein soll und daher die Netzgeräteausgangsspannung höher sein muß, wie die über die Teilnehmerleitung anliegende Gleichspannung. Da letztere bei kurzen Verbindungen bis maximal 72 Volt betragen kann, erfordert das Netzgerät in diesem Fall einen erhöhten Berührungsschutz und wird dadurch preisungünstig. Eine Umwandlung einer niedrigeren Netzgerätespannung in eine höhere Gleichspannung erfordert dagegen einen zusätzlichen Gleichspannungswandler, erhöhten Platzbedarf im Endgerät und es muß mit einem erhöhten Störpegel gerechnet werden.

Die Aufgabe der Erfindung besteht daher darin, eine einfache Schaltungsanordnung zu finden, mit deren Hilfe eine automatische Umschaltung von Netzspeisung auf Fernspeisung bei beispielsweise Netzausfall erfolgen kann, wobei weder ein wesentlicher Platzbedarf noch eine stärkere Isolierung noch ein die Wirtschaftlichkeit infragestellender zusätzlicher Materialaufwand entsteht.

Dies wird dadurch erreicht, daß der eine Anschluß des Pufferkondensators über eine erste in Flußrichtung gepolte Diode mit dem positiven Pol eines Netzgerätes, über eine zweite in Flußrichtung gepolte Diode und die Drain-Source-Strecke eines ersten Transistors (MOS-Transistor) mit dem positiven Pol der Fernspeisung und über die erste Diode und zwei in Serie geschaltete Widerstände mit den negativen Polen von Fernspeisung und Netzgerät und seinem anderen Anschluß verbunden ist, daß weiterhin die Basis des ersten Transistors über die Serienschaltung eines dritten Widerstandes, einer ersten und einer zweiten Zenerdiode mit den negativen Polen, über den dritten Widerstand und einen vierten Widerstand mit dem positiven Pol der Fernspeisung verbunden ist und daß ein zweiter Transistor mit seiner Basis mit dem gemeinsamen Punkt der in Serie geschalteten Widerstände, mit seinem Kollektor mit dem gemeinsamen Punkt der Zenerdioden und mit seinem Emitter mit den negativen Polen verbunden ist.

Hieraus ergibt sich der Vorteil, daß es in einfacher Weise erreicht wird, daß bei vorgenannten Fernsprechstationen z.B. bei Netzausfall wirtschaftlich und ohne Zutun der Bedienungsperson eine Umschaltung von Netzgerätespeisung auf Fernspeisung und umgekehrt erfolgt.

Die erfindungsgemäße Schaltungsanordnung wird anhand einer Figur erläutert.

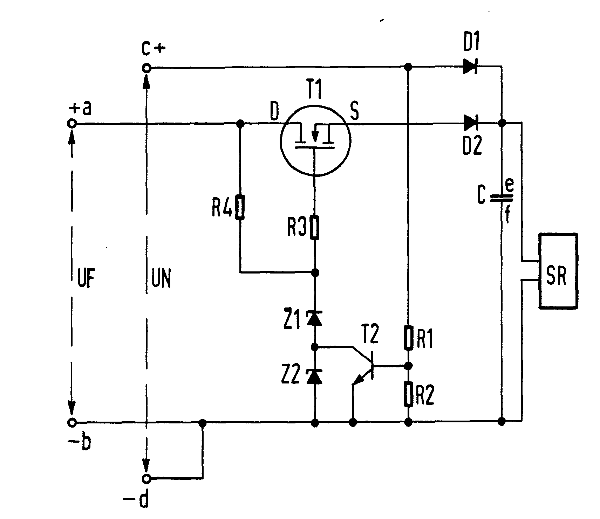

Die Figur zeigt einen Schaltregler SR, einen Pufferkondensator C, zwei Entkopplungsdioden D1 und D2, einen Spannungsteiler, bestehend aus den Widerständen R1 und R2, einen MOS-Transistor T1, einen Transistor T2, einen Vorwiderstand R3, einen Widerstand R4, zwei Zenerdioden Z1 und Z2, die Teilnehmerleitungsanschlüsse a/b und die Netzgeräteanschlüsse c/d.

Bei Fernsprechstationen bzw. Endgeräten vorgenannter Art d.h. mit relativ hohem Leistungsbedarf soll im Normalfall die Gleichspannungsversorgung aus dem angeschalteten Netzgerät erfolgen. Dieses Netzgerät sei in der Figur an den Punkten c(+) und d(−) angeschlossen und es gibt dort die Gleichspannung UN ab. Diese Gleichspannung liegt einerseits über die Entkopplungsdiode D1 an Punkt e des Pufferkondensators C und andererseits an Punkt f des Pufferkondensators C an. Hieraus bezieht der Schaltregler SR seine Eingangsspannung, woraus er die für die eigentliche Stationsschaltung notwendigen Speisespannungen bildet und in nicht dargestellter Weise abgibt.

Die Spannung UN liegt außerdem an dem aus den Widerständen R1 und R2 gebildeten Spannungsteiler an. Die beiden Widerstände R1 und R2 sind so gewählt, daß sich an ihrem gemeinsamen Punkt bei Netzbetrieb eine Spannung für die Basis des Transistors T2 abgreifen läßt, so daß dieser durchgesteuert ist. In durchgesteuertem Zustand überbrück der Transistor T2 die Zenerdiode Z2.

Die an den Punkten a und b—d.h. über die Teilnehmerleitung — anliegende Fernspeisung (UF) kann jetzt nur an der Zenerdiode Z1 (Stromweg T2, Z1, R4) einen Spannungsabfall für die Basis des MOS-Transistors T1 erzeugen (Spannungsabfall am Vor- und Schutzwiderstand R3 vernachlässigt), der nicht ausreicht um den Drain-Source-Weg (DS) des Transistors T1 voll durchzusteuern. Damit liegt am Eingang der Diode D2 eine weniger positive Spannung als an deren Ausgang (+c abzüglich Spannungsabfall von D1) und die Diode D2 befindet sich in gesperrtem Zustand. Damit ist die Fernspeisung mit Ausnahme des vernachlässigbaren Stromes über T2, Z1 und R4 unbelastet und die volle Speisung der Fernsprechstation erfolgt aus dem stationären Netzgerät.

Fällt das Netzgerät aus unterschiedlichen Gründen aus, dann entfällt die Steuerspannung für den Transistor T2 und dieser ist dann in gesperrtem Zustand. Damit ist die Zenerdiode Z2 nicht mehr überbrückt und durch die stets anliegende Spannung UF der Fernspeisung wird jetzt von beiden Zenerdioden die Source-Spannung des Transistors T1 gesteuert. Gleichzeitig wird diese Source-Spannung (an S) durch die beiden Zenerdioden so begrenzt, daß ihr Maximalwert für handelsübliche integrierte Schaltregler nicht zu hoch wird. Bei kurzen Teilnehmerleitungen und damit hoher anliegender Spannung UF wirkt der Transistor T1 zusammen mit den Zenerdioden wie eine geregelte Stromquelle.

Nachdem jetzt die Spannung am Eingang der Diode D2 positiver wie am Ausgang derselben ist, ist die Diode D2 durchlässig und der Schaltregler SR bezieht seine Eingangsspannung über den Transistor T1 und die Diode D2, d.h. aus dem über a, T1, D2 und b aufgeladenen Kondensator C. Würde in diesem Zustand das Netzgerät wieder zugeschaltet werden, dann tritt der zuvor geschilderte Zustand wieder ein, d.h. der Transistor T2 überbrückt die Zenerdiode Z2, die Spannung an S sinkt und die Diode D2 sperrt. Die Fernsprechstation wird damit automatisch wieder aus dem Netzgerät gespeist und die Fernspeisung wird entlastet.

Aus dem Vorstehenden geht hervor, daß es mit Hilfe der erfindungsgemäßen Schaltungsanordnung in einfacher Weise möglich ist, eine Fernsprechstation automatisch und ohne wesentlichen Aufwand von der Netzspeisung auf die Fernspeisung und umgekehrt im Bedarfsfalle umzuschalten.

**Patentanspruch**

Schaltungsanordnung für eine bedarfsweise netz- oder ferngespeiste Fernsprechstation, wobei ein ausgangsseitig eine konstante Versorgungsspannung liefernder und eingangsseitig mit einem Pufferkondensator überbrückter Schaltregler vorgesehen ist, dadurch gekennzeichnet, daß der eine Anschluß (e) des Pufferkondensators (C) über eine erste in Flußrichtung gepolte Diode (D1) mit dem positiven Pol (c) eines Netzgerätes, über eine zweite in Flußrichtung gepolte Diode (D2) und die Drain-Source-Strecke (DS) eines ersten Transistors (T1-MOS-Transistor) mit dem positiven Pol (a) der Fernspeisung und über die erste Diode (D1) und zwei in Serie geschaltete Widerstände (R1, R2) mit den negativen Polen (b, d) von Fernspeisung und Netzgerät und seinem anderen Anschluß (f) verbunden ist, daß weiterhin die Basis des ersten Transistors (T1) über die Serienschaltung eines dritten Widerstandes (R3), einer ersten (Z1) und einer zweiten (Z2) Zenerdiode mit den negativen Polen (b, d), über den dritten Widerstand (R3) und einen vierten Widerstand (R4) mit dem positiven Pol (a) der Fernspeisung verbunden ist und daß ein zweiter Transistor (T2) mit seiner Basis mit dem gemeinsamen Punkt der in Serie geschalteten Widerstände (R1, R2), mit seinem Kollektor mit dem gemeinsamen Punkt der Zenerdioden (Z1, Z2) und mit seinem Emitter mit den negativen Polen (b, d) verbunden ist.

**Revendication**

Montage pour un poste téléphonique alimenté, le cas échéant, à partir du secteur ou à distance, et dans lequel il est prévu un régulateur de commutation délivrant, côté sortie, une tension d'alimentation constante et shunté, côté entrée, par un condensateur tampon, caractérisé par le fait qu'une borne (2) du condensateur tampon (C) est raccordée par l'intermédiaire d'une première diode (D1) polarisée dans le sens direct au pôle positif (c) d'un appareil d'alimentation secteur, et par l'intermédiaire d'une seconde diode (D2) polarisée dans le sens direct et de la voie drain-source (DS) d'un premier transistor (transistor MOS T1) au pôle positif (a) de l'alimentation à distance et par l'intermédiaire de la première diode (D1) et de deux résistances (R1, R2) branchées en série, aux pôles négatifs (b, d) de l'alimentation à distance et de l'appareil d'alimentation secteur et à son autre borne (f), qu'en outre la base du premier transistor (T1) est raccordée, par l'intermédiaire du circuit série formé d'une troisième résistance (R3), d'une première diode Zener (Z1) et d'une seconde diode Zener (Z2), aux pôles négatifs (b, d), et par l'intermédiaire de la troisième résistance (R3) et d'une quatrième résistance (R4) au pôle positif (a) de l'alimentation à distance, et qu'un second transistor (T2) est relié par sa base au point commun des résistances (R1, R2) branchées en série, et par son collecteur au point commun des diodes Zener (Z1, Z2) et par son émetteur aux pôles négatifs (b, d).

**Claim**

Circuit arrangement for a telephone station which is mains-supplied or remote-powered as required, a switching regulator being provided which supplies at its output a constant supply voltage and is bridged at its input by a buffer capacitor, characterized in that the one terminal (e) of the buffer capacitor (C) is connected via a first forward-polarized diode (D1) to the positive pole (c) of a power supply device, via a second forward-polarized diode (D2) and the drain-source path (DS) of a first transistor (T1 MOS transistor) to the positive pole (a) of the remote feed unit, and via the first diode (D1) and two series-connected resistors (R1, R2) to the negative poles (b, d) of remote feed unit and power supply device and to its other terminal (f), in that furthermore the base of the first transistor (T1) is connected via the series circuit of a third resistor (R3) and of a first (Z1) and a second (Z2) Zener diode to the negative poles (b, d), and is connected via the third resistor (R3) and a fourth resistor (R4) to the positive pole (a) of the remote feed unit, and in that a second transistor (T2) is connected by its base to the common point of the series-connected resistors (R1, R2), by its collector to the common point of the Zener diodes (Z1, Z2), and by its emitter to the negative poles (b, d).